(19) Europäisches Patentamt

European Patent Office

Office européen des brevets

(11) **EP 4 710 763 A1**

(12) # EUROPEAN PATENT APPLICATION

published in accordance with Art. 153(4) EPC

(43) Date of publication:
**18.03.2026 Bulletin 2026/12**

(21) Application number: **24805996.6**

(22) Date of filing: **23.01.2024**

(51) International Patent Classification (IPC):
*A01M 21/00* (2006.01)    *G06V 20/10* (2022.01)
*G06F 18/00* (2023.01)

(52) Cooperative Patent Classification (CPC):
**A01M 21/00; G06F 18/00; G06V 20/10**

(86) International application number:
**PCT/BR2024/050019**

(87) International publication number:
**WO 2024/234068 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 BR 102023009186**

(71) Applicants:
• **Zasso Brasil Indústria e Comércio de
Máquinas Ltda.
13347-442 Indaiatuba, SP (BR)**
• **Zasso Group AG
6300 Zug (CH)**
• **Serviço Nacional de Aprendizagem
Industrial - Senai
91140-001 Porto Alegre - RS (BR)**

(72) Inventors:
• **GOMES, Victor Emmanuel De Oliveira
90460-110 Porto Alegre (BR)**
• **NARDELLI, Vitor Camargo
90550-150 Porto Alegre (BR)**

• **RUDUIT, Rodrigo Oselame
90690-000 Porto Alegre (BR)**
• **TRASATTI, Bruno Venanzio
90110-910 Porto Alegre (BR)**
• **FEIJO, Jonas Freitas
92030-010 Canoas (BR)**
• **LARA, Estevan Linck
92420-300 Canoas (BR)**
• **IGLESIAS, Tiago Gomes
92480-000 Nova Santa Rita (BR)**
• **DA MOTTA, Miguel Gonzalez
93022-680 São Leopoldo (BR)**
• **ARNHOLD, Felipe
93022-540 São Leopoldo (BR)**
• **FILHO, Sergio De Andrade Coutinho
13337-423 São Paulo (BR)**
• **RINZLER, Guilherme Penna Moreira
05516-030 São Paulo (BR)**

(74) Representative: **Elzaburu S.L.P.
Paseo de la Castellana 259C
Torre de Cristal, planta 28
28046 Madrid (ES)**

(54) ## SENSING SYSTEM AND METHOD FOR IDENTIFYING INVASIVE PLANTS

(57)    The sensing system for identifying invasive plants comprises an RGB CCD camera for image acquisition, connected to a microcontroller via a DCMI interface for on-board processing of image data and detection of areas corresponding to the color green in the HSV color model. When an area of green color is detected, the device sends a binary signal via the RS485 interface to the machine to which it is attached and performs the programmed action for the specified time.

EP 4 710 763 A1

## Description

### Technical sector

The present invention belongs to the technological sector of agriculture, more specifically it refers to a sensing system and method for identifying invasive plants, which comprises the processing of images captured by a camera, detecting the areas that correspond to the color green and, consequently, repre sent invasive plants. When the presence of an invasive plant is identified on land and plantations, the system sends a signal to the machinery to which it is connected, identifying the presence of the plant and triggering it to carry out the action programmed into its system. For example, in the case of electric weeding, it carries out an electric discharge on the invasive plant.

### State of the art

Sensing invasive plants in crops is a technique that has become increasingly important in modern agriculture. This is because invasive plants can hinder crop development by competing for nutrients, water and sunlight, as well as harboring pests and diseases.

With the use of advanced technologies, such as satellite images, drones, sensors and data processing algorithms, it is possible to detect the presence of invasive plants quickly and efficiently, allowing the adoption of integrated management measures to minimize their negative effects on agricultural production. The sensor also contributes to reducing the use of invasive control techniques, as it allows the precise identification of infested areas, avoiding the unnecessary application of these techniques and reducing environmental impacts.

Patent document CN103348964 describes an intelligent weeding device and its method of use, where the system describes a weeding system that captures images of the terrain and performs image definition processing to define the plant through a clou d and uses radio frequency for data transmission. One limitation of this type of device is the possibility of signal transmission failure between the system's equipment. In addition, the image processing in this invention performs convolution directly after capturing the RGB image, requiring high processor capacity and more processing time.

Patent document CN105469020 describes a system equipped with a weed sensor and a spraying device. The image obtained by the system is processed using the SuperGreen Model, *which uses an* enhancement equation that establishes a weight of two for the green band of the pixel, subtracting the value of the other two remaining bands of weight one from the result; in other words, the pixel in gray scale is given as 2G-R-B. The grey image is passed through the binarization filter using the threshold established by the OTSU method of defining the exclusion threshold. This invention has the same limitation as the previous one, the need for high processing capacity and it does not perform a convolution in its image processing, obtaining different results.

Patent document US 2018 168141 describes an autonomous device with an imaging system that defines which plant should be eliminated. The camera present in the device identifies the types of plants identified and whether or not they should be eliminated. This equipment has the limitation of requiring a very high processing and storage capacity on the part of the system, making the equipment expensive.

Patent document CN113498639 describes an image-processing harvesting system. The imaging system uses a camera to define where and how commercial plants are intentionally planted with a camera located between the rows that defines the plants in that location and their quantity. Although this equipment has a sensor for identifying plants, its purpose and processing method is to identify the type of plants and their count. The equipment requires a high processing capacity, making its cost very high.

### Novelty and purpose of the invention

The object of the present invention is a sensor system and method for identifying invasive plants that effectively resolves the limitations of the prior art.

The sensing system for identifying invasive plants compr ises a "charge-coupled *device" RGB "Red/Green/Blue Color Space" CCD camera for* acquiring the image, connected to a microcontroller, via the DCMI *"Digital Camera Memory Interface"* interface, for on-board processing of image data and detection of a reas corresponding to the color green in *the HSV "Hue/Saturation/Value color space" color model.* The device performs image acquisition and processing between 10 and 15 FPS "Frames per Second". When an area of green color is detected, the device sends a binary signal via the RS485 interface to the machine to which it is attached and performs the programmed action for the set time.

Optionally, the machine that receives the signal from the system is an electric weeding machine.

## Advantages and technical effects of the invention

The sensing system for identifying invasive plants, object of the present invention, results in the following advantages and achieves the following technical effects over sensing systems for identifying invasive plants in the prior art:

The sensing systems for identifying invasive plants of the prior art have an inefficient or very complex image processing method, requiring a high processing capacity of the processor and consequently making the system very expensive. The present invention solves this problem by using a microprocessor that receives images in RGB565, transforms them to RGB24, converts them to HSV, applies a convolution and obtains the desired result using a *Threshold;*

The sensing systems for identifying invasive plants in the state of the art use radiofrequency transmission of signals between the camera and the equipment, increasing the chances of failures and making it possible to interfere with the signals. This is solved by the present invention using a camera system with a microprocessor directly interconnected to the equipment's power module;

The system of the present invention features low-complexity image processing, and a microprocessor can be used, making the system efficient and low-cost.

## List of attached drawings

In order for the present invention to be fully understood and taken into account to practice by any technician in this technological sector, it is now described clearly, precisely and sufficiently, based on the attached drawings, listed below, which illustrate preferred ways of realizing the system sensing:

**Figure 1** - diagram illustrating the system of the invention;
**Figure 2** - block diagram of the interconnection of the system's equipment; and

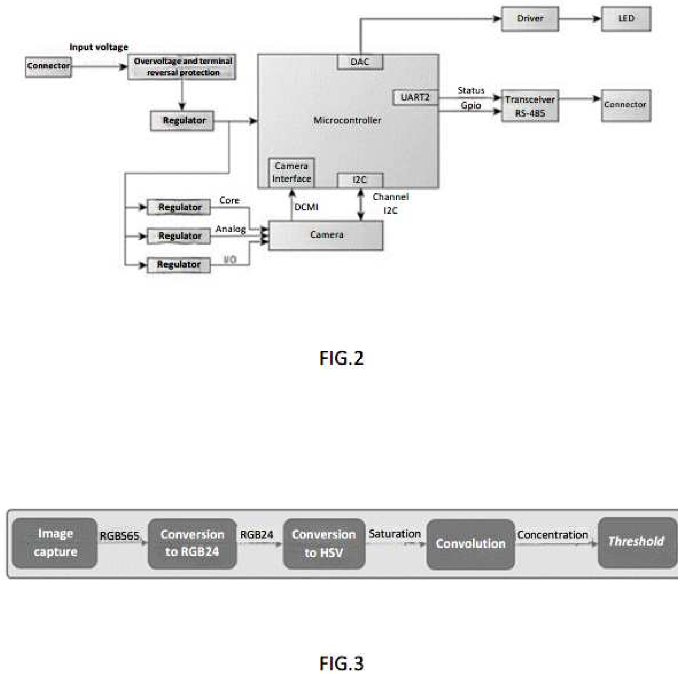

**Figure 2** - flowchart of the image processing method of the invention.

## Detailed description of the invention

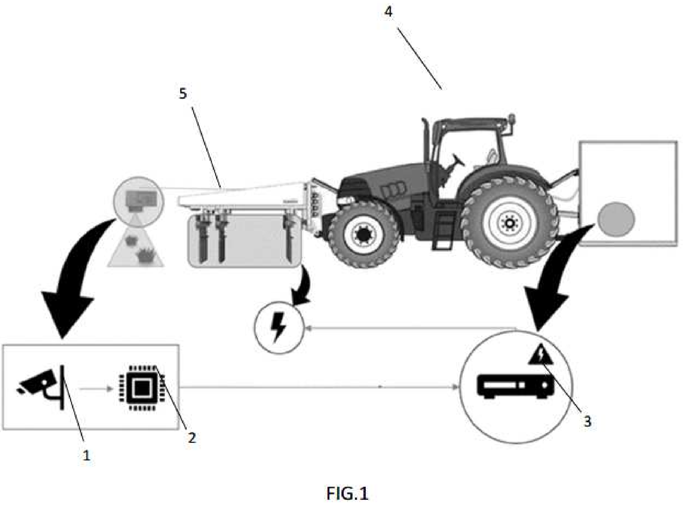

Figure 1 illustrates the sensing system for detecting invasive plants, which comprises an RGB CCD camera (1) for image acquisition, connected to a microcontroller (2), via a DCMI interface, for on-board processing of image data and detection of areas corresponding to the color green in the HSV color model. The system performs image acquisition and processing between 10 and 15 FPS. When an area of green color is detected, the microcontroller (2) processes the image and sends a binary signal with a duration according to the pre-established time, via theR S interface.-time, via the RS485 interface to the machine's power module (3), which triggers the tool (5) and keeps it active for the desired time (depending on the application and decision made by the machine module).

The power module (3) is powered by an energy unit (6), usually a battery or similar object.

Preferably the sending binary signal has a duration of 300 ms.

Alternatively, machine (4) is an electric weeding machine, module (3) being a power module, which drives the tool (5) being an electric weeder carrying out an electric discharge on the invading plants, more specifically, weeds.

Figure 2 illustrates the interconnection blocks of the system's electronic equipment where the energy derived from the machine's battery (4) sends an input voltage to the circuit, passing through the power supply protection set, protecting the circuit against surges, which is then forwarded to the regulators. When the electric current is sent to the regulators, they adjust it according to the subsequent device, microcontroller (2) or camera (1), so that the device works correctly, without receiving too high or too low a voltage. Image acquisition by the microcontroller (2) is carried out via its digital camera interface (DCMI), receiving the *frame* and adjusting the camera configuration (1) via the communication channel (I2C). After processing the image, the microcontroller (2) sends a signal to the module (3) via a *transceiver* which carries out the RS-485 bus of the emitted signal, triggering the tool (5) of the machine (4). At the same time, the microcontroller (2) triggers the LED lights on the machine (4) according to the average luminance of the image (YAVG) acquired from the camera (1).

Figure 2 illustrates the method of processing the image captured by the camera (1) carried out by the microcontroller (2). This process consists of four main stages: Image capture; Pre-processing; Processing; and Result. The camera (1) captures the image in RGB565 and sends it to pre-processing, which consists of sending the *image frame* via RGB565, where the image's color bands are allocated in two *bytes.* Five b*its* are reserved for the red band, six b*its* for the green band and five *bits* for the blue band. The image is transported to the microcontroller (2) via the DCMI data channel. Upon receiving the image, the microcontroller (2) starts processing, a "Direct *Memory Access" DMA* to convert RGB565 into RGB24, which requires 24 *bits* to allocate the *pixel,* one *byte* per band, facilitating processing. When the *pixel* allocated in memory is in R GB565 format, it blends in because it occupies two *bytes* per *pixel,* while when converted to RGB24 it has three *bytes* per *pixel.* Next, in order to delimit the processing to shades of green, the RGB cube is converted to the HSV color system. At this stage, a green matrix range and a minimum value level are delimited and, from this range defined for shades of green, the saturation output variable is obtained. After conversion to the HSV color system, the image is convoluted by passing a two-dimensional filter (mask) through the saturation result to eliminate noise and highlight regions with a greater number of interconnected green-tone pixels. Once the saturation concentration has been obtained, it is possible, using a *Threshold,* to eliminate noise from the acquisition that enters the green spectrum.

Convolution accumulates the saturation value identified in the HSV color model, convoluting an increase in intensity in a population of neighboring pixels, thus making it possible to exclude isolated points of green. After binarization, if the count of pixels detected as green resulting from all the processing exceeds the threshold stipulated as the minimum for activating the signal, the signal that enables the machine to act is sent.

The *Threshold* is the last Threshold Filter applied after the convolution of the saturation, which quantifies the green pixels resulting from all the previous processing to identify the presence of the set of greens.

**HSV conversion**

The conversion from RGB24 to HSV takes place from the RGB Cube and is carried out pixel by pixel using the following equations, starting with the difference equation:

$$\Delta = Cmax \text{ - } Cmin$$

Where:

    *Cmax:* indicates the band with the highest value within the pixel;
    *Cmin:* indicates the lowest value band within the same pixel;
    $\Delta$: indicates difference.

Hue (H) is calculated for each of the pixel's band predominance situations, thus indicating the angle of the color band that the pixel represents according to its most prominent value. For cases in which the difference between the majority band is equal to the minority band, the angle of the color band will be zero. The calculation of Hue for each of these situations can be seen in the equation below:

Equation 1 - calculation of Hue (H)

$$H = \begin{cases} 0°, & \Delta = 0 \\ 60° \times \left(\dfrac{G - B}{\Delta} \bmod 6\right), & Cmax = \quad \text{Red Value} \\ 60° \times \left(\dfrac{B - R}{\Delta} + 2\right), & Cmax = \quad \text{Green Value} \\ 60° \times \left(\dfrac{R - G}{\Delta} + 4\right), & Cmax = \text{Blue Value} \end{cases}$$

Pixel saturation (S) is calculated by dividing the difference ($\Delta$) between the majority band *(Cmax)* and the minority *band* (Cmin) by the majority band. For cases where the majority band is zero, then the pixel saturation is also zero, as shown in the following equation:

Equation 2 - calculation of pixel saturation (S)

$$S = \begin{cases} 0, & Cmax = 0 \\ \dfrac{\Delta}{Cmax}, & Cmax \neq 0 \end{cases}$$

And finally, the Pixel Value (V) is simply the value of its most significant color band and can be seen in the following equation:

$$V = Cmax\ (4)$$

Each of these equations represents a property of the pixel being analyzed, thus facilitating segmentation by color tones and even by a specific color parameter.

## Convolution

Since the aim of the invention does not depend on a specific format, it was decided to use a Gaussian mask with a unit standard deviation (a = 1) that simulates a circular morphological filter of order three, with the central pixel as its Cartesian center, the mask values (G) are generated using the following equation:

## Equation 3 - Calculation of the Gaussian mask (G)

$$G(x,y) = \frac{1}{2.\pi.\sigma^2} . e^{-(\frac{x^2+y^2}{2.\sigma^2})}$$

The choice of this type of mask results in a higher value for the pixels adjacent to the central pixel than for the diagonals. In this way, it is possible to scan the image and aggregate the central pixel based on the pixels in its vicinity in a heterogeneous way, maintaining spatial symmetry.

## Image processing

In this way, the stages of processing the image captured by the camera (1) consist of:

A) The camera captures the image;
B) Sending the image *frame* via RGB565;
C) Converting the image from RGB565 to RGB24;
D) Conversion from RGB24 to HSV, and from the range defined for shades of green, the saturation output variable is obtained;
E) A convolution is performed on the image, passing a two-dimensional filter through the saturation result to eliminate noise and highlight regions with a higher number of interconnected green-tone pixels; and
F) The saturation concentration is determined and through a *Threshold,* noise from the acquisition that enters the green spectrum is eliminated and the final image is the final image is obtained, if the value of the count of pixels detected as green resulting from all the processing exceeds the limit stipulated as the minimum for activating the signal, the signal that enables the action of the tool (4) of the machine (5) is sent.

Once the final image has been obtained, the microcontroller (2) sends a signal to the module (3) of the machine (4) which will activate its tool (5).

The sequence of processing steps has an optimized sequence and applies the double *buffer technique,* which consists of capturing a new image while analyzing the previous one, to facilitate its implementation. In this way, it is as if a *pipeline* were established between the acquisition process and processing. When the *acquired* frame is copied by the DMA and converted to RGB24, it switches between two memory addresses that will contain the frame data. After copying the *frame,* a new acquisition is made, then the processing of the *frame* begins. When the new capture is finished, this new frame is copied and converted to the other memory address, and then the new capture restarts while the processing of the previous image begins.

## Claims

1. - **Sensing system for the identification of invading plants, <u>characterized by</u>** comprising a (1) CCD RGB camera for image acquisition, connected to image acquisition, connected to a microcontroller (2), via a DCMI interface, for on-board processing of image data and detection of areas corresponding to the color green in the HSV color model; the system performs the system performs image acquisition and processing between 10 and 15 FPS when an area of green color is detected, the microcontroller (2) processes the image and sends a binary signal with a duration according to the pre-established time, via the RS 485 interface to the machine's (4) power module (3), which triggers the tool (5) and keeps it active for the desired time, depending on the application and decision made by the machine module (4).

2.  **- Sensing system for the identification of invading plants,** according to claim 1, <u>**characterized in that**</u> the electronic equipment of the system is connected in the following sequence: the energy derived from the machine's battery (4) sends an input voltage to the circuit, passing through the power supply protection set, protecting the circuit against surges, and forwarded to the regulators; when the electric current is sent to the regulators, they adjust it according to the subsequent device, the microcontroller (2) or the camera (1), so that the device works correctly, without receiving a voltage that is too high or too low; the image acquisition by the microcontroller (2) is carried out via its DCMI digital camera interface, receiving the frame and adjusting the camera (1) configuration via the I2C communication channel; and after processing the image, the microcontroller (2) sends a signal to the module (3) via a transceiver which performs the RS-485 bus of the emitted signal, triggering the tool (5) of the machine (4).

3.  **- Sensing system for the identification of invading plants,** according to any of the preceding claims, <u>**characterized in that**</u> preferably the machine (4) is an electric weeding machine, the module (3) being a power module, which drives the tool (5) being an electric weeder by performing an electric discharge next to the invasive plants, more specifically, weeds.

4.  **- Sensing method for the identification of invading plants,** implemented by the system defined in claim 1, **characterized in that** it comprises the following steps:

    A) Capturing the image by the camera (1);
    B) Sending the image frame via RGB565;
    C) Converting the image from RGB565 to RGB24;
    D) Converting from RGB24 to HSV, and from the range defined for shades of green, the saturation output variable is obtained;
    E) A convolution is performed on the image, passing a two-dimensional filter through the saturation result to eliminate noise and highlight regions with a higher number of interconnected green-tone pixels; and
    F) The saturation concentration is determined and, using a Threshold, noise from the acquisition that enters the green spectrum is eliminated and the final image is obtained, if the value of the count of pixels detected as green resulting from all the processing exceeds the limit stipulated as the minimum for activating the signal, the signal that enables the action of the tool (4) of the machine (5) is sent.

5.  **- Sensing method for the identification of invading plants,** according to claim 4, <u>**characterized in that**</u> step B) consists of pre-processing, which consists of sending the image frame via RGB565, where the image color bands are allocated in two bytes; where five bits are reserved for the red band, six bits for the green band and five bits for the blue color band.

6.  **- Sensing method for the identification of invading plants,** according to claim 4, <u>**characterized in that**</u> step (C) consists of the following process: upon receiving the image, the microcontroller (2) uses a DMA to convert RGB565 into RGB24, which requires 24 bits to allocate the pixel, one byte per band, facilitating processing; when the pixel allocated in memory is in RGB565 format, it mixes up due to occupying two bytes per pixel, when converted to RGB24 it has three bytes per pixel.

7.  **- Sensing method for the identification of invading plants,** according to claim 4, <u>**characterized in that**</u>, step D) consists of converting the RGB cube to the HSV color system; in this step a green matrix band and a minimum value level are delimited and, from this defined range for shades of green, the saturation output variable is obtained.

FIG.1

FIG.2

FIG.3

## INTERNATIONAL SEARCH REPORT

| International application No. |
| --- |
| **PCT/BR2024/050019** |

| A. | CLASSIFICATION OF SUBJECT MATTER |
| --- | --- |

A01M 21/00(2006.01)i; *G06V 20/10*(2022.01)i; *G06F 18/00*(2023.01)i
CPC: A01M 21/00, G06V 20/188, G06F 18/00

According to International Patent Classification (IPC) or to both national classification and IPC

| B. | FIELDS SEARCHED |
| --- | --- |

Minimum documentation searched (classification system followed by classification symbols)

A01M
CPC: A01M

Documentation searched other than minimum documentation to the extent that such documents are included in the fields searched

Banco Brasileiro de Patentes - INPI/BR

Electronic data base consulted during the international search (name of data base and, where practicable, search terms used)

Derwent Innovation, Espacenet

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| Y | BR 112018073098 A2 (BASF SE [DE]) 02 April 2019 (2019-04-02)<br>Paragraphs [0023, 0070, 0082] | 1 |
| Y | CN 112544204 A (UNIV WUHAN TECH) 26 March 2021 (2021-03-26)<br>Paragraph [0027]; figure 2 | 1 |
| A | US 2022132831 A1 (ZASSO GROUP AG [CH]) 05 May 2022 (2022-05-05)<br>The whole document | 3 |
| A | BR 112020019528 A2 (BAYER AG [DE]) 05 January 2021 (2021-01-05)<br>The whole document | 4 - 7 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **19 April 2024** | **29 April 2024** |

| Name and mailing address of the ISA/BR | Authorized officer |
| --- | --- |
| **National Institute of Industrial Property (Brazil)**<br>**Rua Mayrink Veiga, 9, 6° andar, CEP 20.090-910 Rio de Janeiro – RJ**<br>**Brazil** | **SILVER RODRIGUES ZANDONÁ** |
| Telephone No. **(55 21) 3037-3742, 3037-3984** | Telephone No. **+55 21 3037 4528 - 3037 3319** |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| BR | 112018073098 | A2 | 02 April 2019 | BR | 112018073098 | A8 | 04 April 2023 |
| | | | | AU | 2017262614 | A1 | 29 November 2018 |
| | | | | CA | 3023792 | A1 | 16 November 2017 |
| | | | | CN | 109416735 | A | 01 March 2019 |
| | | | | EP | 3244343 | A1 | 15 November 2017 |
| | | | | EP | 3455784 | A1 | 20 March 2019 |
| | | | | JP | 2019520632 | A | 18 July 2019 |
| | | | | RU | 2018143340 | A | 15 June 2020 |
| | | | | RU | 2018143340 | A3 | 25 August 2020 |
| | | | | RU | 2764872 | C2 | 21 January 2022 |
| | | | | US | 2019220666 | A1 | 18 July 2019 |
| | | | | US | 11048940 | B2 | 29 June 2021 |
| | | | | WO | 2017194398 | A1 | 16 November 2017 |
| CN | 112544204 | A | 26 March 2021 | NONE | | | |
| US | 2022132831 | A1 | 05 May 2022 | AR | 123751 | A1 | 11 January 2023 |
| | | | | DE | 102019006646 | A1 | 10 September 2020 |
| | | | | EP | 3934421 | A2 | 12 January 2022 |
| | | | | WO | 2020177919 | A2 | 10 September 2020 |
| | | | | WO | 2020177919 | A3 | 29 October 2020 |
| BR | 112020019528 | A2 | 05 January 2021 | AR | 117408 | A1 | 04 August 2021 |
| | | | | AU | 2019245829 | A1 | 03 September 2020 |
| | | | | CA | 3095070 | A1 | 03 October 2019 |
| | | | | CN | 111867372 | A | 30 October 2020 |
| | | | | EP | 3545760 | A1 | 02 October 2019 |
| | | | | EP | 3772932 | A1 | 17 February 2021 |
| | | | | IL | 277390 | A | 30 November 2020 |
| | | | | JP | 2021519080 | A | 10 August 2021 |
| | | | | JP | 7357633 | B2 | 06 October 2023 |
| | | | | KR | 20200132886 | A | 25 November 2020 |
| | | | | MX | 2020010088 | A | 28 October 2020 |
| | | | | US | 2021015087 | A1 | 21 January 2021 |
| | | | | WO | 2019185434 | A1 | 03 October 2019 |

Form PCT/ISA/210 (patent family annex) (July 2022)

**EP 4 710 763 A1**

**Patent documents cited in the description**

- CN 103348964
- CN 105469020
- US 2018168141 A
- CN 113498639